(19) **Europäisches Patentamt / European Patent Office / Office européen des brevets**

(11) **EP 4 275 814 B1**

(12) **EUROPEAN PATENT SPECIFICATION**

(45) Date of publication and mention
of the grant of the patent:
**02.07.2025 Bulletin 2025/27**

(21) Application number: **22425021.7**

(22) Date of filing: **11.05.2022**

(51) International Patent Classification (IPC):
**B22F 10/25** (2021.01) **B22F 7/06** (2006.01)
**B23K 26/00** (2014.01) **B23K 101/00** (2006.01)
**B23K 103/18** (2006.01) **B33Y 10/00** (2015.01)
**B33Y 80/00** (2015.01) **C22C 1/04** (2023.01)
**C22C 19/07** (2006.01) **B22F 1/05** (2022.01)
**B22F 5/04** (2006.01) **B23K 26/342** (2014.01)
**B23K 35/30** (2006.01) **F01D 5/00** (2006.01)
**B33Y 70/00** (2020.01)

(52) Cooperative Patent Classification (CPC):
**C22C 19/07; B22F 1/05; B22F 5/04; B22F 10/25;**
**B23K 26/0006; B23K 26/342; B23K 35/3046;**
**B33Y 10/00; B33Y 70/00; B33Y 80/00;**
**C22C 1/0433; F01D 5/005;** B22F 2007/068;
B23K 2101/001; B23K 2103/26; (Cont.)

(54) **COBALT-BASED ALLOY FOR ADDITIVE MANUFACTURING**

LEGIERUNG AUF KOBALTBASIS ZUR GENERATIVEN FERTIGUNG

ALLIAGE À BASE DE COBALT POUR FABRICATION ADDITIVE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**15.11.2023 Bulletin 2023/46**

(73) Proprietor: **ANSALDO ENERGIA S.p.A.**
**16152 Genova (IT)**

(72) Inventors:
• **Gallo, Benedetto Guglielmo**
**16152 Genova (IT)**

• **Intiso, Luciana**
**00128 Roma (IT)**
• **Tassa, Oriana**
**00128 Roma (IT)**

(74) Representative: **Studio Torta S.p.A.**
**Corso Magenta, 56**
**20123 Milano (IT)**

(56) References cited:
**EP-A1- 3 964 308** **DE-A1- 102019 208 246**
**US-A- 6 077 615**

(52) Cooperative Patent Classification (CPC): (Cont.)
   Y02P 10/25

**Description**

TECHNICAL FIELD

The present invention relates to cobalt-based alloy for additive manufacturing. Specifically, it relates to a cobalt-based alloy for energy-based additive manufacturing processes, which utilize a concentrated heat source such as a laser or electron beam, to generate prototype metallic parts, or to produce complex and customized parts, or to clad/repair metallic components for a variety of engineering applications. More specifically, it relates to cobalt-based alloy to be used for repairing of turbine components through Direct Laser Deposition (DLD) process.

BACKGROUND OF THE DISCLOSURE

Presently, the additive technologies in manufacturing are widely developed in all industrialized countries. Replacing the traditional technology of casting and machining with additive technologies allows decreasing of consumption of raw materials and reducing amount of waste and labor cost.

Direct laser deposition (DLD) is among the additives technologies and it has been implemented for additive metal part manufacture, repair and reconstruction.

DLD uses a laser beam as an energy source to melt metallic powders, manufacture parts layer by layer and repair or cladding components by depositing one or a few layers.

The repair/remanufacturing of high-value metallic components is one of the main applications of DLD. Examples of products that can be repaired by DLD include gearboxes, gears, combustion engine parts, couplings, shafts and turbine parts, such as turbine blades.

With regard to the turbine parts and, specifically, to the hot gas path (HGP) parts of gas turbine, these are susceptible to wear and damage over time. Indeed, the metallic components (such as blades and vanes), included in the HGP parts and, thus, routinely exposed to high temperature combustion gases, reach their "end of life" stage prematurely even if they are made of high strength alloys, which temporally help achieving good thermo-mechanical properties. Moreover, current developments in the industrial gas turbines towards increased efficiency and performance require even higher operating temperature for HGP parts. In case of replacement, such metallic components present challenging in manufacturing since they require special tooling and consume a significant amount of raw material and energy during manufacturing processes. Consequently, a cost effective and efficient repair process, such as the DLD process, is appropriated for remanufacturing such damaged components and extending the life of HGP components.

In applying repair processes, no specific tooling for a component is required. Generally, additive technologies are based upon depositing a powder material, for instance a metal powder, and melting and resolidifying the powder at selected locations such as to form a component with a specific geometry from the resolidified material. With specific regard to the DLD process, a focused laser beam is used to produce a melt pool on a substrate. Then, a nozzle feeds the powder material into the generated melt pool by means of carrier gas. When the powder material enters into the melt pool, it melts and when the laser moves away, the molten material solidifies and a raised track is obtained.

As is apparent, this process allows for a great flexibility of the geometry of the component to be manufactured/repaired.

Despite the great capabilities and potentialities of DLD technology, its wide diffusion in the industrial gas turbine is still limited due to some technological issues and barriers, among which the raw material used as filler material and, specifically, powder alloy for DLD repairing operations. Indeed most of the current commercial powders are not suitable to be used for DLD process since the resulting repaired area shows poor mechanical properties, low oxidation resistance and inadequate porosity distribution.

Currently, standard alloys such as Haynes 230, PWA795 and alloy 625 (2.4856) are used for blade repair with DLD. However, these commercial powder alloys do not fit the requirements of most advanced repairs in terms, mainly, of high temperature oxidation resistance. Even if the commercial alloy PWA795, which will be taken as a reference material for the present invention, has improved mechanical, creep and oxidation properties with respect to alloy 625, it still shows limits when used in DLD repairing process, such as the tensile ductility of the repaired parts is lower than that of the bulk material.

Alternatively, the patent application EP 3636381 discloses a metallic powder mixture usable for build up via liquid metal deposition or any additive manufacturing method. The disclosed metallic powder mixture comprises a Cobalt or Nickel based super alloy, a NiCoCrAlY-composition and a metallic braze material. This metallic powder shows an increased oxidation resistance than base material Alloy 247 when used as a powder additive material for blade tip manufacture and/or repair. However, the new component or the repaired one, obtained by means of additive manufacturing with the disclosed metallic powder mixture, does not show optimized mechanical properties, which are indeed beneficial in cycling work conditions and in fatigue regimes as typically found in gas turbine engines, and for instance in the combustor regions.

Document DE102019208246 discloses a powder mixture for producing a layer e.g. a coupon, which comprises a cobalt-based alloy comprising nickel, chromium, aluminum, tungsten, tantalum, titanium, boron, carbon, hafnium, zirconium, iron, niobium, molybdenum, germanium, silicon and cobalt.

In that context, an opportunity to develop and implement new powder materials for repairing metallic components of gas turbine by means of DLD to improve actual repair limits and to extend their service life exists.

LINEOUT OF THE SUBJECT MATTER OF THE PRESENT INVENTION

It is an object of the present invention to propose a new cobalt-based alloy for additive manufacturing. More specifically, the cobalt-based alloy is a new alloy powder to be used for repairing of turbine components through DLD process. In one aspect of the present invention, an improvement over the known art shall be achieved. In another aspect of the presently invention subject matter, it is intended to provide a cobalt-based alloy which has a cost and/or time advantage over the known art. In still a further aspect, the disclosed cobalt-based alloy combines high laserability, optimized mechanical properties and high oxidation resistance. More specifically, the presently disclosed subject matter it is intended to provide a cobalt-based alloy with laserability, mechanical, creep and oxidation properties, which are improved at least with respect to alloy 625 and, in some instances, also with respect to PWA795. In a more specific aspect, the disclosed cobalt-based alloy provides at least an improved tensile ductility, especially at high temperature, with respect to the reference PWA795 alloy.

It is a further object of the present disclosure to propose a method for repairing turbine components through DLD process. More specifically, this method uses the disclosed cobalt-based alloy.

This is achieved by the subject matter described in claim 1, and further by the subject matters of the further independent claims. Advantageous embodiments are described in dependent claims.

Further effects and advantages of the disclosed subject matter, whether explicitly mentioned or not, will become apparent in view of the disclosure provided below.

In brief, a cobalt-based alloy for repairing turbine components by means of an additive manufacturing process, such as DLD process, is disclosed, whose constituent elements and their content have been chosen in order to combine high laserability and improved mechanical, creep and oxidation behavior over the baseline alloy 625 and, in some instance, over the alloy reference PWA795. Indeed, differently to the known alloys, the disclosed cobalt-based alloy comprises a higher carbon content, which is optimally balanced with carbide former elements contents, leading to an increase of carbide fractions and, thus, to an increase of carbide hardening effect for the benefit of the mechanical properties, but preserving high laserability.

In more detail, the present invention relates to a cobalt-based alloy comprises in weight percent (wt %):

| | | |
|---|---|---|
| Chromium (Cr) | from 19.00 | to 21.00 |
| Nickel (Ni) | from 19.00 | to 21.00 |
| Tungsten (W) | from 8.50 | to 9.50 |
| Aluminum (Al) | from 4.80 | to 5.20 |
| Titanium (Ti) | from 0.10 | to 0.30 |
| Tantalum (Ta) | from 2.50 | to 3.50 |
| Carbon (C) | from 0.40 | to 0.50 |
| Hafnium (Hf) | from 0.75 | to 1.25 |
| Niobium (Nb) | not higher | than 0.20 |
| Yttrium (Y) | from 0.02 | to 0.07 |
| Zirconium (Zr) | from 0.01 | to 0.03, |

impurities from less than or equal to 1 wt%,

the balance being cobalt (Co),
wherein the ratio M/C in atomic percentage (at %) between the sum of Ta, Ti, Hf, Nb, Zr and C is less or equal to 0.80.

Notably, the content of carbon is higher with respect to that in the reference PWA750 alloy (see below Table 4). Since carbon drives the formation of carbides (MC, $M_7C_3$, $M_{23}C_6$ and possible $M_6C$) precipitates, a higher carbon content leads to a higher formation of carbides precipitates, which in turn results in a superior strength of cobalt-based alloy deposits when compared to PWA750 tensile properties. At the same time, the higher content of carbon does not negatively affect the laserability.

Remarkably, the content of W is ranging from 8.50 wt % to 9.50 wt %, that is, it is less than 10 wt %, to avoid excessive precipitation of topologically close pack (TCP) phases, namely σ and μ phases, which would negatively affect the oxidation resistance and, to a lesser extent, the mechanical property of cobalt-based alloy deposits.

It is noted that, the content of Al is ranging from 4.80 wt % to 5.20%, ensuring the β-NiAl phase formation at lower temperature than the solidification temperature to the benefit of laserability.

Notably, Molybdenum (Mo) is not an alloying element of the disclosed cobalt-based alloy. Indeed, the addition of Mo within the disclosed cobalt-based alloy composition would result in an enlarge of the solidification range and, thus, in a low laserability of the disclosed cobalt-based alloy.

In addition, Rhenium (Re) is not an alloying element of the disclosed cobalt-based alloy.

Although the addition of Re would improve the mechanical properties of cobalt-based alloy deposits by solid solution strengthening, it would lead to price rise.

The skilled person will readily appreciate that some residual constituents may be present as impurities in addition to the constituents listed and quantified above, and thus the cobalt content may be slightly less than the difference noted above. Here and in the following, the expression "the balance being cobalt" is to be understood that the difference of the sum of the elemental contents of all mentioned elements, and in certain instances plus eventual impurities, to 100 wt % is provided as cobalt. Impurities, as commonly understood, are all those elements and compounds which are not purposively added to the alloy formulation, but are however present in small amounts being contained in the raw materials used for manufacturing the alloy. According to the present invention,

impurities accounts for less than or equal to 1 wt %.

Along with the alloying elements contents above listed, the disclosed cobalt-based alloy requires that the ratio between the sum of some metals (M) and C, both expressed in atomic percentage (at %), is less or equal than 0.80, wherein M is the sum of Ta, Ti, Hf, Nb, Zr. Specifically, these metals (M) are involved in the primary carbides formation, among with MC carbides, such as TaC.

In such a way, an optimal balance of C content and of the content of metals (M) is achieved. Accordingly, this leads to an increase primary carbides fraction formation, and thus to an increase of primary carbides precipitation hardening effect, which enhances mechanical and creep properties of the disclosed cobalt-based alloy deposits compared to the reference PWA795.

Another benefit of the so established M/C ratio is that the solidification range is narrow to the benefit of high laserability of the disclosed cobalt-based alloy thanks to the fact the high content of C is involved in carbides formation.

In addition to the primary carbides hardening, the precipitation hardening can also be promoted by secondary carbides precipitation, namely Cr-based carbides such as $Cr_{23}C_6$.

Therefore, in a preferred embodiment of the present disclosure, the disclosed cobalt-based alloy fulfils the requirement that the sum of Cr, W and Ta is less or equal to 33.00 wt % for preventing the formation of brittle phases during the diffusion treatment. It this way, the tensile properties of cobalt-based alloy can be further enhanced with respect to the reference PWA795 alloy.

Moreover, the established requirement avoids the formation of TCP phases at the diffusion temperature set at 1080°C for the benefit of oxidation resistance of the disclosed cobalt-based alloy.

In a further preferred embodiment of the present disclosure, the disclosed cobalt-based alloy fulfils the requirement that the sum of Cr, W and Al is less or equal to 34.50 wt %. In this way, the precipitation of β-NiAl phase is controlled and optimized for the benefit of oxidation resistance and mechanical properties. With reference to the mechanical properties, their further improvements is the result of the optimized β-NiAl phase precipitation strengthening together with carbides precipitation hardening.

The disclosed cobalt-based alloy can be delivered in the form of powder or wire, preferably in the form of powder. Preferably, ingots with the disclosed cobalt-based alloy composition are fabricated by a vacuum induced melting (VIM) furnace and used for the fabrication of the powder by vacuum inert gas atomization (VIGA) plant. However, other powder fabrication methods can be employed provided that the obtained powder is equivalent and conform to the engineering requirements.

The particles size of the disclosed cobalt-based alloy powder is ranging from 45 μm and 105 μm, and, thus, complying with the DLD process requirements.

Moreover, the apparent density is lower than 5 g/cm3, while the flowability is less than 25 s.

In a further aspect of the present invention, a method is disclosed for repairing turbine components, preferably blades and vanes, through **a** DLD process, wherein the method comprises depositing a powder material and locally melting and resolidifying the powder material, thereby providing a solid body, wherein the powder material is the disclosed cobalt-based alloy.

The additive manufacturing process is DLD.

Further, a mechanical component, preferably a turbine component, comprising the cobalt-based alloy as disclosed and obtained by the disclosed method is disclosed. The mechanical component may be an engine component, in particular a turboengine component, and more specifically a component intended for use in a gas turbine engine.

The porosity of the disclosed mechanical component is lower than 6%, and the average density is higher than 99.9%.

Based on a simulation results, the disclosed cobalt-based alloy shows a narrow solidification range resulting in a high laserability, and the mechanical component, comprising the disclosed cobalt-based alloy, show improved tensile and creep properties with respect to the reference PWA795, comparable oxidation behavior with respect to the reference PWA795 and reduced fabrication cost with respect to the reference PWA795.

In addition, based on experimental investigations, it was found that the disclosed mechanical component, comprising the disclosed cobalt-based alloy, exhibits beneficial characteristics, such as, but not limited to, an excellent tensile ductility at elevated temperature.

All these advantages are mainly the result of the synergetic effect of high carbon content and the high carbides precipitation hardening.

EXEMPLARY MODES OF CARRYING OUT THE TEACHING OF THE PRESENT INVENTION

*Alloy design of the disclosed cobalt-based alloy*

To achieve the target properties, a set of models have been used. Thermodynamic and kinetic models were used to predict solidification behavior, phase transformation, thermophysical properties evolution and physical models were used to predict properties.

Firstly, in order to check the reliability of the models used, the simulations have been performed on the reference PWA795 and then comparison of simulations with the experimental data has been evaluated.

By considering the main phases fractions and compositions of PWA795, namely β phase and carbides, and selecting Nickel-database as the thermodynamic database to predict the microstructure of the reference PWA795, good agreement between simulation results and experimental data have been obtained for the reference PWA795.

For example, good agreement has been observed between calculated and experimental yield strength (YS) at room temperature of the reference PWA795, wherein the simulations of the yield strength has been performed by modelling both the solid solution strengthening by JMatPro, which is the commercial simulation software performing thermodynamic and kinetic modeling, and the precipitation strengthening by Orowan model. With regard to the precipitation strengthening contribution, the effect of β phase with mean size of 300 nm, MC carbide, namely TaC, with size of 100 nm and $M_{23}C_6$ carbide with mean size of 50 nm have been considering via Orowan model. Table 1 summaries the model evaluation of YS at room temperature on the reference PWA795.

Table 1

| | Wt.% | Ψ | E (GPa) | ν | b | r (nm) | Interdist (nm) | Δσ Orowan (MPa) | Solid solution strengthening (MPa) | Orowan strengthening (MPa) | YS tot (MPa) calc | YS tot (MPa) Exp |
|---|---|---|---|---|---|---|---|---|---|---|---|---|
| TaC | 4.60 | 3.06 | 215 | 0.31 | 0.2485 | 100 | 675 | 105 | 455 | 231 | 686 | 700 |
| β phase | 5.60 | 3.06 | 215 | 0.31 | 0.2485 | 300 | 1834 | 44 | | | | |
| $M_{23}C_6$ | 0.82 | 3.06 | 215 | 0.31 | 0.2485 | 50 | 799 | 82 | | | | |

wherein:

$\psi$ is the Taylor factor taken from literature,
E is the Young's module calculated by JMatPro as function of temperature,
v is Poisson's ratio calculated by JMatPro as function of temperature,
b is the Burgers vector taken from literature,
r is particle radius given as an input.

Once the reliability of the simulations performed on the reference PWA795 has been established, the same input data have been used for simulating the thermodynamic, mechanical, creep, oxidation behavior of the disclosed cobalt-based alloy.

For example, Table 2 lists the input data for tensile at room temperature and at high temperature.

Table 2

| Grain size* | 10 $\mu$m |
|---|---|
| Heat treatment temperature | 1080°C |
| Strain rate | $1 \times 10^{-4}$ s$^{-1}$ |
| * Assumption based on literature for Nickel alloys by additive manufacturing process. | |

*Chemical composition of a selected cobalt-based alloy according to the invention (Co-1) and its calculated properties.*

As a result of the thermodynamic and mechanical properties simulations above illustrated, the following cobalt-based alloy has been selected, hereafter referred to Co-1, whose chemical composition (in wt %) is shown in Table 3.

Table 3

| | W | Cr | Al | Ti | Ta | Y | Nb | Hf | C | Zr | Ni | Co |
|---|---|---|---|---|---|---|---|---|---|---|---|---|
| Co-1 | 9.00 | 20.00 | 5.00 | 0.20 | 3.00 | 0.02 | 0.15 | 1.00 | 0.45 | 0.02 | 20.00 | Bal. |

For the sake of completeness, Table 4 displays the chemical composition in wt % of the reference PWA795 purchased by Praxair.

8

Table 4

| | W | Cr | Al | Ti | Ta | Y | Nb | Hf | C | Zr | Ni | Co | Mn | Si | B | Fe |
|---|---|---|---|---|---|---|---|---|---|---|---|---|---|---|---|---|
| PWA795 | 8.81 | 20.31 | 4.4 | 0.20 | 2.94 | 0.02 | | 0.85 | 0.35 | 0.02 | 15.27 | 46.51 | 0.05 | 0.16 | 0.0005 | 0.13 |

Outputs of thermodynamic simulations of the reference PWA795 and of Co-1 are summarized in Table 5.

Table 5

| Alloy | $\Delta T_{sol}$ (°C) | T$\beta$eq (°C) | F $\beta$ at 1080°C | F max MC | F $M_{23}C_6$ at 1080°C | Carbides tot | T$\mu$ | T$\sigma$ | T$\gamma$' | M/C (at %) | Cr+W+Al (wt %) | Cr+W+Ta (wt %) |
|---|---|---|---|---|---|---|---|---|---|---|---|---|
| PWA795 | 108 | 1185 | 5.60 | 4.60 | 0.82 | 5.41 | 1007 | 823 | <600 | 0.88 | 33.52 | 32.06 |
| Co-1 | 62 | 1243 | 8.67 | 5.10 | 2.45 | 7.55 | 1018 | 818 | 692 | 0.75 | 34.00 | 32.00 |

wherein,

$$\Delta T_{sol} = T_{liquid} - T_{solidus} \text{ (Scheil simulation)},$$

T$\beta$eq is the temperature of formation of $\beta$ phase at equilibrium,
F$\beta$ is the fraction of $\beta$ phase at 1080°C (diffusion treatment),
F max MC is the fraction of MC carbides at the heat treatment temperature of 1080°C, F $M_{23}C_6$ is the fraction of $M_{23}C_6$ carbide at the heat treatment temperature of 1080°C, T$\mu$, T$\sigma$ and T$\gamma$' are the temperatures of formation of TCP phases ($\sigma$, $\mu$) and of $\gamma$' phase, M/C corresponds to the ratio between the sum of Ta, Ti, Hf, Nb, Zr (expressed in atomic %) and C (expressed in atomic %).

From Table 5 is evident that the solidification range of Co-1 is lower with respect to the reference PWA795 for the benefit of its laserability.
Moreover, the M/C ratio of Co-1 results to be lower than 0.8, while that one of the reference PWA795 is higher than 0.8. It follows that the fraction of carbides, which significantly contribute to the strengthening, is higher in Co-1 than in the reference PWA795.
It has also to be noted that the fraction of $\beta$ phase at 1080°C is higher in Co-1 than in the reference PWA795 for the benefit of oxidation resistance and precipitation hardening. Related to this, $\beta$ phase precipitation is optimized when the sum of Cr + W + Al is lower than 34.50 wt %, which is fully satisfied by Co-1.
In addition, the temperatures of formation of TCP phases ($\sigma$ and $\mu$) are lower than 1080°C (diffusion temperature) for the benefit of oxidation resistance. Related to this, preventing the formation of TCP phases during the diffusion treatment is obtained when the sum of Cr+W+Ta is lower than 33.00 wt%, which is fully satisfied by Co-1.
Table 6 lists the calculated yield strength and the creep property of the reference PWA795 and of Co-1.

Table 6

| | $YS_{RT}$ (Mpa) | $YS_{HT}$ (Mpa) | Stress rupture at 950°C at 1000 hours (MPa) | ' Stress rupture at 950°C at 3000 hours (MPa) | ' Stress rupture at 950°C at 5000 hours (MPa) | Stress rupture at 950°C at 10000 hours (MPa) |
|---|---|---|---|---|---|---|
| PWA795 | 686 | 230 | 52.4 | 45.9 | 44.2 | 43.4 |
| Co-1 | 755 | 269 | 61.7 | 57.0 | 56.3 | 56.8 |

wherein:

RT = room temperature,
$YS_{RT} = YS_{ss} + YS_{\beta\text{-phase}} + YS_{carbides}$, wherein the solid solution strengthening ($YS_{SS}$) is simulated by JMatPro, while the precipitation strengthening ($YS_{\beta\text{-phase}} + YS_{carbides}$) is evaluated by Orowan model,
HT= high temperature at 900°C,
$YS_{HT}$ is calculated as $YS_{RT}$ with the addition of a reduction factor, which accounts for the climb mechanism (local climb) competing with Orowan mechanism. This reduction factor for Orowan contribution is calibrated on the basis of tensile test experimental results of the reference PWA795 and amounts to 0.85.

Stresses ruptures at 1000/3000/5000/10000 hours at 950°C, which evaluate the creep behavior of the alloys, are modelled by considering both the effect of solid solution on creep strength by JMatPro and the effect of phases precipitation by the Orowan contribution. In addition a reduction factor of 0.2 is used to calibrate the experimental results.

From Table 6 is evident that the calculated yield strength of Co-1 shows an increment of 10% at room temperature and 17% at high temperature with respect to the reference PWA795.

Referring to the creep property, Co-1 shows an increment of 17.7%, 24.2%, 27.2% and 30.8% with respect to the reference PWA795 for the calculated stresses ruptures at 950°C and at four different times (1000, 3000, 5000 and 10000 hours).

In addition, costs have been evaluated considering mainly the specific cost of each alloying elements. On the bases of the model simulation, process costs for Co-1 alloy is estimated to be reduced by 5% with respect to the reference PWA795.

*Co-1 powder production and characterization*

Co-1 powder has been obtained starting from the fabrication of ingots by VIM. Next, the ingot has been cut for the production of Co-1 powder by VIGA, which is then sieved to obtain the right granulometric distribution.

The obtained Co-1 powder has been characterized in terms of

- flowability by means of the Hall funnel according to ASTM B213 or ISO 4490. The measured flowability corresponds to 16.65 s, which suggest a good behavior in the powder bed;
- size distribution by means of laser diffraction methods. The measured size distribution is ranging from 45 $\mu$m to 105 $\mu$m, which is reliable for DLD process;
- apparent density measured according to ASTM B212 or ISO 3923-1. The measured apparent density corresponds to 4.4 g/cm$^3$;
- morphology by means of SEM analysis. Co-1 powder shows good morphology and presents some satellites as well as some irregular powder.

From SEM analysis, Ta and W enriched precipitates have been observed at the inderdendritic spaces. These precipitates, identifiable as carbides, have size ranging from 50 nm to 400 nm.

*DLD process with Co-1 powder*

Tests for evaluating the laserability of Co-1 alloy have been performed. In this regard, DLD cell from BLM, called Additube has been employed.

Table 7 discloses the set of optimized DLD parameters used for the test bars fabrication using the reference PAW795 and Co-1 alloy powders.

Table 7

| Parameters | Alloy powders (PWA795 and Co-1) |
|---|---|
| Nozzle type | 3-way |
| Gas type | Argon |
| SOD (mm) | 12 |
| Laser spot diameter (mm) | 2.2 |
| Shielding gas flow (l/min) | 25 |
| Carrier gas flow (l/min) | 7.5 |
| Powder flow rate (g/min) | 14 |
| Power (W) | 700 |
| Scan speed (mm/s) | 10 |
| Track height (mm) | 1 |
| Track width (mm) | 2 |
| Laser head increment (mm) | 0.8 |
| Overlap (mm) | 0.8 |
| Hatch distance (mm) | 1.2 |

In this way, test bars of 20.4 X 20.4 X 123 mm$^3$ have been fabricated and then evaluated in terms of oxidation resistance and tensile ductility.

With these DLD process parameters, the quality of the fabricated test bars was very good in terms of:

- density, which is about 99.98%,
- no cracks have been observed,
- total porosity, which is about 0.02%, and, therefore, well below the 6% threshold. Notably, defects, in terms of porosity and crack, have been assessed by means of Image Analysis Software.

**Claims**

1. A cobalt-based alloy for repairing turbine components by means of a direct laser deposition (DLD) process comprising in weight percentage (wt %):

| | |
|---|---|
| Chromium (Cr) | from 19.00 to 21.00 |
| Nickel (Ni) | from 19.00 to 21.00 |
| Tungsten (W) | from 8.50 to 9.50 |
| Aluminum (Al) | from 4.80 to 5.20 |
| Titanium (Ti) | from 0.10 to 0.30 |
| Tantalum (Ta) | from 2.50 to 3.50 |
| Carbon (C) | from 0.40 to 0.50 |
| Hafnium (Hf) | from 0.75 to 1.25 |
| Niobium (Nb) | not higher than 0.20 |
| Yttrium (Y) | from 0.02 to 0.07 |
| Zirconium (Zr) | from 0.01 to 0.03, |
| Impurities | from less than or equal to 1 wt%, |

the balance being cobalt (Co),
wherein the ratio M/C in atomic percentage (at %) between the sum of Ta, Ti, Hf, Nb, Zr and C is less or equal to 0.80.

2. The cobalt-based alloy as claimed in claim 1, wherein the sum of Cr, W, and Ta is less or equal to 33.00 wt %.

3. The cobalt-based alloy as claimed in claim 1 or 2, wherein the sum of Cr, W and Al is less or equal to 34.50 wt %.

4. The cobalt-based alloy as claimed in any one of the preceding claims, consisting of (in wt %):

| | |
|---|---|
| Chromium (Cr) | 20.00 |
| Nickel (Ni) | 20.00 |
| Tungsten (W) | 9.00 |
| Aluminum (Al) | 5.00 |
| Titanium (Ti) | 0.20 |
| Tantalum (Ta) | 3.00 |
| Carbon (C) | 0.45 |
| Hafnium (Hf) | 1.00 |
| Niobium (Nb) | 0.15 |
| Yttrium (Y) | 0.02 |
| Zirconium (Zr) | 0.02 |

the balance being cobalt (Co) and impurities.

5. The cobalt-based alloy as claimed in any one of the previous claims, wherein the cobalt-based alloy is in powder form, having particles size ranging from 45 μm to 105 μm, measured by means of laser diffraction methods.

6. Use of the cobalt-based alloy as claimed in any one of the previous claims for repairing turbine components by means of a direct laser deposition (DLD) process.

7. A method for repairing turbine components, the method comprising applying a direct laser deposition (DLD) process, wherein the method comprises depositing a powder material and locally melting and resolidifying the powder material, thereby providing a solid body, wherein the powder material is the cobalt-based alloy as claimed in claims from 1 to 5.

8. A mechanical component made of cobalt-based alloy as claimed in claims from 1 to 5.

9. The mechanical component as claimed in claim 8, wherein the mechanical component has a total porosity less than 6% and an average density higher than 99.9%.


**Patentansprüche**

1. Auf Cobalt basierende Legierung zum Reparieren von Turbinenkomponenten mittels eines auf Direct Laser Deposition (DLD) basierenden Prozesses, umfassend in Gewichtsprozent (Gew.-%)

| | | |
|---|---|---|
| Chrom (Cr) | von 19,00 | bis 21,00 |
| Nickel (Ni) | von 19,00 | bis 21,00 |
| Wolfram (W) | von 8,50 | bis 9,50 |
| Aluminium (Al) | von 4,80 | bis 5,20 |
| Titan (Ti) | von 0,10 | bis 0,30 |
| Tantal (Ta) | von 2,50 | bis 3,50 |
| Kohlenstoff (C) | von 0,40 | bis 0,50 |
| Hafnium (Hf) | von 0,75 | bis 1,25 |
| Niobium (Nb) | nicht mehr | als 0,20 |
| Yttrium (Y) | von 0,02 | bis 0,07 |
| Zirconium (Zr) | von 0,01 | bis 0,03 |
| Verunreinigungen | ab weniger | oder gleich 1 Gew.-%, |

wobei der Rest Cobalt (Co) ist,
wobei das Verhältnis von M zu C in Atomprozent (Atom%) zwischen der Summe aus Ta, Ti, Hf, Nb, Zr und C kleiner oder gleich 0,80 ist.

2. Auf Cobalt basierende Legierung gemäß Anspruch 1, wobei die Summe aus Cr, W und Ta kleiner oder gleich 33,00 Gew.-% ist.

3. Auf Cobalt basierende Legierung gemäß Anspruch 1 oder 2, wobei die Summe aus Cr, W und Al kleiner oder gleich 34,50 Gew.-% ist.

4. Auf Cobalt basierende Legierung gemäß einem der vorhergehenden Ansprüche, die aus Folgendem (in Gew.-%) besteht:

| | |
|---|---|
| Chrom (Cr) | 20,00 |
| Nickel (Ni | 20,00 |
| Wolfram (W) | 9,00 |
| Aluminium (Al) | 5,00 |
| Titan (Ti) | 0,20 |
| Tantal (Ta) | 3,00 |
| Kohlenstoff (C) | 0,45 |
| Hafnium (Hf) | 1,00 |
| Niobium (Nb) | 0,15 |
| Yttrium (Y) | 0,02 |

(continued)

| | |
|---|---|
| Zirconium (Zr) | 0,02 |

wobei der Rest aus Cobalt (Co) und Verunreinigungen besteht.

5. Auf Cobalt basierende Legierung gemäß einem der vorhergehenden Ansprüche, wobei die auf Cobalt basierende Legierung in Pulverform vorliegt, die eine mittels Laserbeugungsverfahren gemessene Partikelgröße hat, die von 45 μm bis 105 μm reicht.

6. Verwendung der auf Cobalt basierenden Legierung gemäß einem der vorhergehenden Ansprüche, zum Reparieren von Turbinenkomponenten mittels eines auf Direct Laser Deposition (DLD) basierenden Prozesses.

7. Verfahren zum Reparieren von Turbinenkomponenten, wobei das Verfahren die Anwendung eines auf Direct Laser Deposition (DLD) basierenden Prozesses umfasst, wobei das Verfahren umfasst: Auftragen eines Pulvermaterials und lokales Aufschmelzen und Wiedererstarren des Pulvermaterials, wodurch ein Festkörper bereitgestellt wird, wobei das Pulvermaterial die auf Cobalt basierende Legierung gemäß einem Ansprüche 1 bis 5 ist.

8. Mechanische Komponente, die aus der auf Cobalt basierenden Legierung gemäß einem Ansprüche 1 bis 5 hergestellt ist.

9. Mechanische Komponente gemäß Anspruch 8, wobei die mechanische Komponente eine Gesamtporosität, die kleiner als 6% ist, und eine durchschnittliche Dichte hat, die größer als 99,9% ist.

**Revendications**

1. Alliage à base de cobalt pour réparer des composants de turbine au moyen d'un processus de dépôt laser direct (DLD) comprenant en pourcentage pondéral (% en poids):

| | |
|---|---|
| Chrome (Cr) | de 19,00 à 21,00 |
| Nickel (Ni) | de 19,00 à 21,00 |
| Tungstène (W) | de 8,50 à 9,50 |
| Aluminium (Al) | de 4,80 à 5,20 |
| Titane (Ti) | de 0,10 à 0,30 |
| Tantale (Ta) | de 2,50 à 3,50 |
| Carbone (C) | de 0,40 à 0,50 |
| Hafnium (Hf) | de 0,75 à 1,25 |
| Niobium (Nb) | pas plus de 0,20 |
| Yttrium (Y) | de 0,02 à 0,07 |
| Zirconium (Zr) | de 0,01 à 0,03, |
| Impuretés | de moins de ou égal à 1 % en poids, |

le reste étant du cobalt (Co),
où le rapport M/C en pourcentage atomique (% at) entre la somme de Ta, Ti, Hf, Nb, Zr et C est inférieur ou égal à 0,80.

2. Alliage à base de cobalt selon la revendication 1, où la somme de Cr, W et Ta est inférieure ou égale à 33,00 % en poids.

3. Alliage à base de cobalt selon la revendication 1 ou 2, où la somme de Cr, W et Al est inférieure ou égale à 34,50 % en poids.

4. Alliage à base de cobalt selon l'une quelconque des revendications précédentes, consistant en (en % en poids):

| | |
|---|---|
| Chrome (Cr) | 20,00 |

(continued)

| | |
|---|---|
| Nickel (Ni) | 20,00 |
| Tungstène (W) | 9,00 |
| Aluminium (Al) | 5,00 |
| Titane (Ti) | 0,20 |
| Tantale (Ta) | 3,00 |
| Carbone (C) | 0,45 |
| Hafnium (Hf) | 1,00 |
| Niobium (Nb) | 0,15 |
| Yttrium (Y) | 0,02 |
| Zirconium (Zr) | 0,02 |

le reste étant du cobalt (Co) et des impuretés.

5. Alliage à base de cobalt selon l'une quelconque des revendications précédentes, où l'alliage à base de cobalt est sous forme de poudre, ayant une taille de particules allant de 45 μm à 105 μm, mesurée au moyen de procédés de diffraction laser.

6. Utilisation de l'alliage à base de cobalt selon l'une quelconque des revendications précédentes pour réparer des composants de turbine au moyen d'un processus de dépôt laser direct (DLD).

7. Procédé pour réparer des composants de turbine, le procédé comprenant l'application d'un processus de dépôt laser direct (DLD), où le procédé comprend le dépôt d'un matériau en poudre et la fusion et la resolidification localement du matériau en poudre, donnant ainsi un corps solide, où le matériau en poudre est l'alliage à base de cobalt selon les revendications 1 à 5.

8. Composant mécanique fait de l'alliage à base de cobalt selon les revendications 1 à 5.

9. Composant mécanique selon la revendication 8, où le composant mécanique a une porosité totale inférieure à 6 % et une densité moyenne supérieure à 99,9 %.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3636381 A
- DE 102019208246